(19) **Europäisches Patentamt European Patent Office Office européen des brevets**

(11) **EP 3 063 398 B1**

(12) **FASCICULE DE BREVET EUROPEEN**

(45) Date de publication et mention de la délivrance du brevet:
**08.08.2018 Bulletin 2018/32**

(21) Numéro de dépôt: **14793212.3**

(22) Date de dépôt: **18.09.2014**

(51) Int Cl.:
*F02D 41/22* *(2006.01)*    *F02D 41/14* *(2006.01)*

(86) Numéro de dépôt international:
**PCT/FR2014/052321**

(87) Numéro de publication internationale:
**WO 2015/063382 (07.05.2015 Gazette 2015/18)**

(54) **PROCÉDÉ DE PROTECTION THERMIQUE D'UN MOTEUR À COMBUSTION INTERNE DE VÉHICULE AUTOMOBILE ET CALCULATEUR MOTEUR CORRESPONDANT**

**VERFAHREN ZUM WÄRMESCHUTZ EINES VERBRENNUNGSMOTORS EINES KRAFTFAHRZEUGS UND ENTSPRECHENDER MOTORCOMPUTER**

**METHOD FOR THERMAL PROTECTION OF AN INTERNAL COMBUSTION ENGINE OF A MOTOR VEHICLE AND CORRESPONDING ENGINE COMPUTER**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2013 FR 1360654**

(43) Date de publication de la demande:
**07.09.2016 Bulletin 2016/36**

(73) Titulaire: **PSA Automobiles SA
78300 Poissy (FR)**

(72) Inventeurs:
• **CHARDEL, Fabrice**
  **F-94550 Chevilly Larue (FR)**
• **BERTRAND, Cyrille**
  **F-92000 Nanterre (FR)**
• **TEXIER, Philippe**
  **F-78150 Rocquencourt (FR)**

(74) Mandataire: **Renous Chan, Véronique
PSA Automobiles SA
VPIB - LG081
18 rue des Fauvelles
92250 La Garenne Colombes (FR)**

(56) Documents cités:
**WO-A1-01/98642      DE-A1- 19 961 290
FR-A1- 2 537 652     US-A1- 2012 067 327
US-B2- 6 941 245**

• **Frank Willems ET AL: "2007-01-1574 Is closed-loop SCR control required to meet future emission targets? Ignace van den Heuvel", , 1 janvier 2007 (2007-01-01), XP055185666, Extrait de l'Internet:
URL:http://www.mate.tue.nl/mate/pdfs/7535. pdf [extrait le 2015-04-24]**

**EP 3 063 398 B1**

**Description**

L'invention porte sur un procédé de protection thermique d'un moteur à combustion interne de véhicule automobile ainsi que sur le calculateur moteur correspondant. L'invention trouve une application particulièrement avantageuse avec tous les moteurs à combustion interne de type diesel ou à essence munis d'un circuit de refroidissement dans lequel circule un liquide de refroidissement. Ce liquide de refroidissement est souvent désigné par le terme "eau" bien qu'il soit en général à base de glycol.

Les stratégies de protection thermique visent à limiter la puissance mécanique du moteur généralement via une réduction du couple fourni par le moteur dans des situations de vie thermiquement critiques afin de respecter notamment des critères de température du liquide de refroidissement.

Les contraintes en termes de coûts et de performances imposées au moteur et au circuit de refroidissement étant de plus en plus grandes, on observe une activation plus fréquente des stratégies de protection thermique sur un plus grand nombre de situations de vie du véhicule. Or la mise au point de ces stratégies est longue et coûteuse, dans la mesure où elle nécessite de simuler toutes les situations de vie thermiquement critiques en soufflerie pour déterminer la réduction de couple stabilisant la température du liquide de refroidissement en dessous d'une valeur critique. Le document US6941245 enseigne ainsi de sélectionner un couple maximal relatif du moteur dans une cartographie en fonction de données de variations de température et d'une évolution de température issus de nombreux essais de calibration. Ce type de stratégie impose une réduction de couple bien déterminée, exprimée sous forme absolue (couple maximum) ou en relatif (en pourcentage par rapport à la pleine charge) et qui doit être identifiée par des essais en soufflerie sur des moyens physiques, c'est une stratégie en boucle ouverte.

De plus, la calibration de ces stratégies n'est pas générique. Tout nouveau modèle de véhicule nécessite donc une phase de mise au point pour déterminer une calibration spécifique. En effet, l'utilisation de calibrations non dédiées serait susceptible d'engendrer une perte de fiabilité due au dépassement des critères de température du liquide de refroidissement et/ou à la génération intempestive de messages de défaillances à destination du conducteur.

En outre, les lois de commande de ces stratégies de protection thermique permettent difficilement de distinguer l'ensemble des situations de vie critiques, ce qui pourra amener à mettre en oeuvre une protection non adaptée pour certaines situations de vie particulières du véhicule. Ainsi, dans le cas où la protection est trop couvrante pour une situation de vie donnée, la réduction de couple moteur sera trop importante, ce qui entraînera une diminution des performances dynamiques du véhicule. A l'inverse, dans le cas où la protection est peu couvrante pour une situation de vie donnée, les critères de température ne seront plus respectés, ce qui entraînera des risques de détérioration des organes du moteur.

L'invention vise à remédier efficacement à ces inconvénients en proposant un procédé de protection thermique d'un moteur à combustion interne de véhicule automobile comportant un circuit de refroidissement à l'intérieur duquel circule un liquide de refroidissement dont la température varie en fonction du temps, caractérisé en ce qu'il comporte l'étape d'adapter en boucle fermée un couple maximal de limitation dudit moteur à combustion interne en fonction d'un coefficient de correction dépendant d'un écart entre une vitesse instantanée d'évolution de la température du liquide de refroidissement et une vitesse limite d'évolution de la température du liquide de refroidissement.

L'invention propose ainsi un procédé permettant d'évaluer automatiquement la réduction de couple nécessaire pour ne pas dépasser les critères de température du liquide de refroidissement. L'invention permet de s'adapter à toutes les situations de vie du circuit de refroidissement tout en réduisant grandement voire en supprimant la phase de calibration réalisée en soufflerie. On voit que cette stratégie en boucle fermée s'appuie ainsi sur un processus itératif qui utilise en entrée le couple issu du roulage, et sur lequel on vient appliquer un coefficient réducteur. Avec une telle stratégie, on n'a plus besoin une de choisir une réduction de couple bien déterminée et de faire des essais en soufflerie, comme dans l'art antérieur évoqué au préambule du présent texte.

L'invention assure en outre une protection thermique sur toute la durée de vie du véhicule, dans la mesure où une dérive des performances des organes du circuit de refroidissement pourra être compensée par l'auto-adaptativité de la stratégie. L'invention permet également d'améliorer l'agrément de conduite par une réduction progressive et lissée du couple moteur pour s'adapter au besoin thermique du moteur.

Selon une mise en oeuvre, la vitesse limite d'évolution de la température du liquide de refroidissement est égale au rapport entre une différence entre une température maximale du liquide de refroidissement et une température mesurée du liquide de refroidissement et une constante de temps paramétrable. Cette vitesse limite d'évolution correspond à une vitesse à ne pas dépasser afin de disposer de suffisamment de temps pour réguler la puissance du moteur et maîtriser la montée de température du circuit de refroidissement.

Selon une mise en oeuvre, la température maximale du liquide de refroidissement est une température du liquide de refroidissement à ne pas dépasser en fonctionnement nominal du circuit de refroidissement.

Selon une mise en oeuvre, le procédé comporte l'étape de pondérer une puissance moyenne du moteur par ledit coefficient de correction pour en déduire ledit couple maximal de limitation. L'intérêt de déterminer dans un premier temps la puissance moteur de limitation pour en déduire le couple de limitation est de conserver une limitation cohérente lors des changements de rapports de vitesse.

Selon une mise en oeuvre, la puissance moyenne est calculée sur une durée paramétrable de quelques secondes.

Selon une mise en oeuvre, lorsque la vitesse limite d'évolution de la température du liquide de refroidissement est positive et que la vitesse instantanée d'évolution de la température du liquide de refroidissement est supérieure à la vitesse limite d'évolution de la température du liquide de refroidissement, le coefficient de correction est inférieur à un, lorsque la vitesse limite d'évolution de la température du liquide de refroidissement est positive et que la vitesse instantanée d'évolution de la température du liquide de refroidissement est inférieure à la vitesse limite d'évolution de la température du liquide de refroidissement, le coefficient de correction est supérieur à un,

lorsque la vitesse limite d'évolution de la température du liquide de refroidissement est négative et que la vitesse instantanée d'évolution de la température du liquide de refroidissement est inférieure à la vitesse limite d'évolution de la température du liquide de refroidissement, le coefficient de correction est inférieur à un, et

lorsque la vitesse limite d'évolution de la température du liquide de refroidissement est négative et que la vitesse instantanée d'évolution de la température du liquide de refroidissement est supérieure à la vitesse limite d'évolution de la température du liquide de refroidissement, le coefficient de correction est inférieur à un dans une plus grande mesure que dans les autres cas dans lesquels le coefficient de correction est inférieur à un.

Selon une mise en oeuvre, le couple maximal de limitation du moteur présente une valeur minimum définie en fonction d'un régime du moteur. Cela permet d'éviter le calage du moteur pouvant se produire en cas de relâchement de la pédale d'accélération ou d'une descente de côte ne nécessitant pas de puissance motrice.

De préférence, la mise en oeuvre du procédé est désactivée lorsqu'une vitesse du véhicule passe en dessous d'un premier seuil. On évite ainsi, lorsque la vitesse du véhicule est faible, que la chute de vitesse du véhicule causée par une réduction de couple importante engendre un risque pour les autres automobilistes.

De préférence, la mise en oeuvre du procédé est réactivée lorsque la vitesse du véhicule est supérieure à un deuxième seuil supérieur au premier seuil de manière à obtenir un fonctionnement en hystérésis.

L'invention a également pour objet un calculateur moteur comportant une mémoire stockant des instructions logicielles pour la mise en oeuvre du procédé de protection thermique d'un moteur à combustion interne selon l'invention.

L'invention sera mieux comprise à la lecture de la description qui suit et à l'examen des figures qui l'accompagnent. Ces figures ne sont données qu'à titre illustratif mais nullement limitatif de l'invention.

La figure 1 est une représentation schématique fonctionnelle des différents modules mettant en oeuvre le procédé de protection thermique selon la présente invention;

La figure 2 représente les valeurs du coefficient de correction en fonction des valeurs de la vitesse limite et de la vitesse instantanée de l'évolution de la température du liquide de refroidissement.

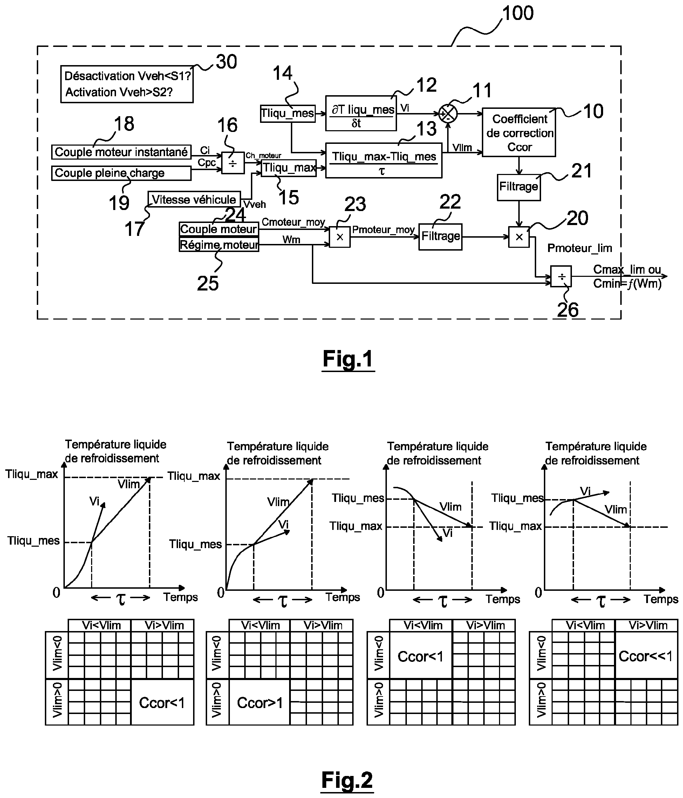

La figure 1 est une représentation schématique fonctionnelle des différents modules mettant en oeuvre le procédé de protection thermique d'un moteur à combustion interne selon la présente invention. Ce moteur à combustion interne de type diesel ou à essence comporte un circuit de refroidissement à l'intérieur duquel circule un liquide de refroidissement dont la température varie en fonction du temps.

Plus précisément, le module 10 détermine dans une cartographie un coefficient de correction Ccor qui dépend d'un écart calculé, par le soustracteur 11, entre une vitesse instantanée Vi d'évolution de la température du liquide de refroidissement et une vitesse limite Vlim d'évolution de la température du liquide de refroidissement. Le coefficient de correction Ccor dépend également de la valeur de la vitesse limite Vlim afin de distinguer les cas où la température du système est au-dessus ou en dessous de la température maximale Tliqu_max. La vitesse instantanée Vi exprimée en degrés Celsius par seconde est déterminée par le module 12.

La vitesse limite Vlim d'évolution de la température du liquide de refroidissement déterminée par le module 13 est égale au rapport entre la différence entre une température maximale Tliqu_max du liquide de refroidissement et une température mesurée Tliqu_mes du liquide de refroidissement et une constante de temps paramétrable $\tau$, soit Vlim=(Tliqu_max-Tliqu_mes)/$\tau$. La température Tliqu_mes est la température du liquide de refroidissement mesurée par le capteur de température du circuit de refroidissement (cf. module 14).

Cette vitesse Vlim correspond à la vitesse d'évolution de la température du liquide de refroidissement à ne pas dépasser afin de disposer de suffisamment de temps pour réguler la puissance du moteur et maîtriser la montée de température du circuit de refroidissement. La vitesse limite Vlim est calculée en permanence à partir de la constante de temps paramétrable $\tau$.

La température maximale Tliqu_max du liquide de refroidissement est la température du liquide de refroidissement à ne pas dépasser en fonctionnement nominal du circuit de refroidissement. Cette température maximale Tliqu_max déterminée par le module 15 dépend de la charge du moteur Ch_moteur issue du module 16 et d'une vitesse du véhicule Vveh déterminée par un capteur de vitesse (cf. module 17). La charge du moteur Ch_moteur est égale au rapport entre le couple instantané du moteur Ci et le couple à pleine charge du moteur Cpc déterminés par les modules 18 et 19.

Comme cela ressort de la figure 2, lorsque la vitesse limite Vlim est positive et que la vitesse instantanée Vi est supérieure à la vitesse limite Vlim, le coefficient de correction Ccor est inférieur à un et vaut par exemple de l'ordre de 0.99 (diminution de 1% du couple moteur maximal). Lorsque la vitesse limite Vlim est positive et que la vitesse instantanée Vi est inférieure à la vitesse limite Vlim, le coefficient de correction Ccor est supérieur à un et vaut de l'ordre de 1.01 (augmentation de 1% du couple moteur maximal). Lorsque la vitesse limite Vlim est négative et que la vitesse instantanée Vi est inférieure à la vitesse limite Vlim, le coefficient de correction Ccor est inférieur à un et vaut de l'ordre 0.99 (diminution de 1% du couple moteur maximal). Lorsque la vitesse limite Vlim est négative et que la vitesse instantanée Vi est supérieure à la vitesse limite Vlim, le coefficient de correction Ccor est inférieur à un dans une plus grande mesure que dans les autres cas dans lesquels le coefficient de correction Ccor est inférieur à un et est compris par exemple entre 0.90 et 0.95 (diminution comprise entre 5 et 10% du couple moteur maximal). Les valeurs du coefficient de correction Ccor sont proches de 1 du fait d'un fonctionnement en boucle fermé du système et de leur application sur des valeurs de la puissance moyenne Pmoteur_moy du moteur.

En effet, un module 20 assure une pondération de la puissance moyenne du moteur Pmoteur_moy par le coefficient de correction Ccor pour obtenir une puissance maximale de limitation du moteur Pmoteur_lim suivant la relation suivante:

$$\text{Pmoteur\_lim} = \text{Ccor} \times \text{Pmoteur\_moy}$$

Le coefficient de correction Ccor ainsi que la puissance moyenne Pmoteur_moy pourront préalablement être filtrés respectivement par les modules 21 et 22. Les filtres appliqués pour atténuer les variations du coefficient de correction Ccor et de la puissance moyenne du moteur Pmoteur_moy sont de préférence des filtres temporels d'ordre 1.

La puissance moyenne du moteur Pmoteur_moy est calculée sur une durée paramétrable de quelques secondes. La puissance moyenne du moteur Pmoteur_moy est égale au produit, calculé par le module 23, entre une moyenne du couple moteur Cmoteur_moy et le régime moteur Wm issus respectivement des modules 24 et 25. La puissance moyenne du moteur Pmoteur_moy représente un "historique" des déperditions thermiques du moteur, avec comme résultante la température du liquide de refroidissement mesurée à un instant donné.

Le couple maximum de limitation du moteur Cmax_lim est directement calculé par le ratio entre la puissance de limitation Pmoteur_lim et le régime moteur Wm via le module 26. L'intérêt de déterminer dans un premier temps la puissance maximale de limitation du moteur Pmoteur_lim pour en déduire ensuite le couple de limitation Cmax_lim est de conserver une limitation cohérente lors des changements de rapports de vitesse.

Dans le cas d'un relâchement de la pédale d'accélération ou d'une descente de côte ne nécessitant pas de puissance motrice, la puissance moyenne du moteur Pmoteur_moy est nulle. Dans ce cas de vie, le couple maximal de limitation Cmax_lim peut donc provoquer le calage du moteur. Afin d'éviter que cela se produise, le couple maximal de limitation Cmax_lim présente une valeur minimum Cmin définie en fonction du régime moteur Wm.

En outre, le procédé de protection thermique est de préférence désactivé (cf. module 30) lorsque la vitesse du véhicule Vveh passe en dessous d'un premier seuil S1. Lorsque le véhicule roule à faible allure, cela permet d'éviter que la chute de vitesse du véhicule causée par une réduction de couple importante engendre un risque pour les autres automobilistes. Le procédé pourra être réactivé lorsque la vitesse du véhicule Vveh devient supérieure à un deuxième seuil S2. Le deuxième seuil S2 est supérieur au premier seuil de manière à obtenir un fonctionnement en hystérésis.

L'implémentation des différents modules 10-26 pourra être réalisée sous forme d'instructions logicielles stockées dans une mémoire 100 d'un calculateur moteur du véhicule automobile.

**Revendications**

1. Procédé de protection thermique d'un moteur à combustion interne de véhicule automobile comportant un circuit de refroidissement à l'intérieur duquel circule un liquide de refroidissement dont la température varie en fonction du temps, **caractérisé en ce qu'**il applique une stratégie itérative en boucle fermée utilisant en entrée le couple issu du roulage, et sur lequel on vient appliquer un coefficient réducteur en comportant l'étape d'adapter en boucle fermée un couple maximal de limitation (Cmax_lim) dudit moteur à combustion interne en fonction d'un coefficient de correction (Ccor) dépendant d'un écart entre une vitesse instantanée (Vi) d'évolution de la température du liquide de refroidissement et une vitesse limite (Vlim) d'évolution de la température du liquide de refroidissement.

2. Procédé selon la revendication 1, **caractérisé en ce que** la vitesse limite (Vlim) d'évolution de la température du liquide de refroidissement est égale au rapport entre une différence entre une température maximale du liquide de refroidissement (Tliqu_max) et une température mesurée du liquide de refroidissement (Tliqu_mes) et une constante de temps paramétrable ($\tau$).

3. Procédé selon la revendication 2, **caractérisé en ce que** la température maximale du liquide de refroidissement (Tliqu_max) est la température du liquide de refroidissement à ne pas dépasser en fonctionnement nominal du circuit de refroidissement.

**4.** Procédé selon l'une quelconque des revendications 1 à 3, **caractérisé en ce qu'**il comporte l'étape de pondérer une puissance moyenne du moteur (Pmoteur_moy) par ledit coefficient de correction (Ccor) pour en déduire ledit couple maximal de limitation (Cmax_lim).

**5.** Procédé selon la revendication 4, **caractérisé en ce que** la puissance moyenne (Pmoteur_moy) est calculée sur une durée paramétrable de quelques secondes.

**6.** Procédé selon l'une quelconque des revendications 1 à 5, **caractérisé en ce que** lorsque la vitesse limite (Vlim) d'évolution de la température du liquide de refroidissement est positive et que la vitesse instantanée (Vi) d'évolution de la température du liquide de refroidissement est supérieure à la vitesse limite (Vlim) d'évolution de la température du liquide de refroidissement, le coefficient de correction (Ccor) est inférieur à un,
lorsque la vitesse limite (Vlim) d'évolution de la température du liquide de refroidissement est positive et que la vitesse instantanée (Vi) d'évolution de la température du liquide de refroidissement est inférieure à la vitesse limite (Vlim) d'évolution de la température du liquide de refroidissement, le coefficient de correction (Ccor) est supérieur à un,
lorsque la vitesse limite (Vlim) d'évolution de la température du liquide de refroidissement est négative et que la vitesse instantanée (Vi) d'évolution de la température du liquide de refroidissement est inférieure à la vitesse limite (Vlim) d'évolution de la température du liquide de refroidissement, le coefficient de correction (Ccor) est inférieur à un, et
lorsque la vitesse limite (Vlim) d'évolution de la température du liquide de refroidissement est négative et que la vitesse instantanée (Vi) d'évolution de la température du liquide de refroidissement est supérieure à la vitesse limite (Vlim) d'évolution de la température du liquide de refroidissement, le coefficient de correction (Ccor) est inférieur à un dans une plus grande mesure que dans les autres cas dans lesquels le coefficient de correction (Ccor) est inférieur à un.

**7.** Procédé selon l'une quelconque des revendications 1 à 6, **caractérisé en ce que**, le couple maximal de limitation (Cmax_lim) du moteur présente une valeur minimum (Cmin) définie en fonction d'un régime du moteur (Wm).

**8.** Procédé selon l'une quelconque des revendications 1 à 7, **caractérisé en ce que** sa mise en oeuvre est désactivée lorsqu'une vitesse du véhicule (Vveh) passe en dessous d'un premier seuil (S1).

**9.** Procédé selon la revendication 8, **caractérisé en ce que** sa mise en oeuvre est réactivée lorsque la vitesse du véhicule (Vveh) est supérieure à un deuxième seuil (S2) supérieur au premier seuil de manière à obtenir un fonctionnement en hystérésis.

**10.** Calculateur moteur comportant une mémoire (100) stockant des instructions logicielles pour la mise en oeuvre du procédé de protection thermique d'un moteur à combustion interne selon l'une quelconque des revendications précédentes.

**Patentansprüche**

**1.** Verfahren zum Wärmeschutz eines Verbrennungsmotors eines Kraftfahrzeugs, das einen Kühlkreislauf umfasst, in dessen Innerem eine Kühlflüssigkeit zirkuliert, deren Temperatur in Abhängigkeit von der Zeit variiert, **dadurch gekennzeichnet, dass** es eine iterative Strategie in geschlossener Schleife anwendet, die am Eingang das Drehmoment, das aus dem Fahren hervorgeht, verwendet, und auf das man einen Reduktionskoeffizienten anwendet, indem es den Schritt des Anpassens in geschlossener Schleife eines maximalen Begrenzungslimits (Cmax_lim) des Verbrennungsmotors in Abhängigkeit von einem Korrekturkoeffizienten (Ccor), der von einem Unterschied zwischen der Entwicklungsmomentangeschwindigkeit (Vi) der Temperatur der Kühlflüssigkeit und einer Entwicklungsgrenzgeschwindigkeit (Vlim) der Temperatur der Kühlflüssigkeit abhängt, umfasst.

**2.** Verfahren nach Anspruch 1, **dadurch gekennzeichnet, dass** die Entwicklungsgrenzgeschwindigkeit (Vlim) der Temperatur der Kühlflüssigkeit gleich dem Verhältnis zwischen einem Unterschied zwischen einer maximalen Temperatur der Kühlflüssigkeit (Tliqu_max) und einer gemessenen Temperatur der Kühlflüssigkeit (Tliqu_mes) und einer parametrierbaren Zeitkonstante (τ) ist.

**3.** Verfahren nach Anspruch 2, **dadurch gekennzeichnet, dass** die maximale Temperatur der Kühlflüssigkeit (Tliqu_max) die Temperatur der Kühlflüssigkeit ist, die beim Nennbetrieb des Kühlkreislaufs nicht zu überschreiten ist.

**4.** Verfahren nach einem der Ansprüche 1 bis 3, **dadurch gekennzeichnet, dass** es den Schritt des Gewichtens einer mittleren Leistung des Motors (Pmoteur_moy) durch den Korrekturkoeffizienten (Ccor) umfasst, um daraus das maximale Begrenzungsmoment (Cmax_lim) abzuleiten.

**5.** Verfahren nach Anspruch 4, **dadurch gekennzeichnet, dass** die mittlere Leistung (Pmoteur_moy) auf einer parametrierbaren Dauer von einigen Sekunden berechnet wird.

6. Verfahren nach einem der Ansprüche 1 bis 5, **dadurch gekennzeichnet, dass**, wenn die Entwicklungsgrenzgeschwindigkeit (Vlim) der Temperatur der Kühlflüssigkeit positiv ist und die Entwicklungsmomentangeschwindigkeit (Vi) der Temperatur der Kühlflüssigkeit höher ist als die Entwicklungsgrenzgeschwindigkeit (Vlim) der Kühlflüssigkeit, der Korrekturkoeffizient (Ccor) kleiner ist als eins, wenn die Entwicklungsgrenzgeschwindigkeit (Vlim) der Temperatur der Kühlflüssigkeit positiv ist und die Entwicklungsmomentangeschwindigkeit (Vi) der Temperatur der Kühlflüssigkeit kleiner ist als die Entwicklungsgrenzgeschwindigkeit (Vlim) der Temperatur der Kühlflüssigkeit, der Korrekturkoeffizient (Ccor) größer ist als eins, wenn die Entwicklungsgrenzgeschwindigkeit (Vlim) der Temperatur der Kühlflüssigkeit negativ ist und die Entwicklungsmomentangeschwindigkeit (Vi) der Temperatur der Kühlflüssigkeit kleiner ist als die Entwicklungsgrenzgeschwindigkeit (Vlim) der Temperatur der Kühlflüssigkeit, der Korrekturkoeffizient (Ccor) kleiner ist als eins, und wenn die Entwicklungsgrenzgeschwindigkeit (Vlim) der Temperatur der Kühlflüssigkeit negativ ist und die Entwicklungsmomentangeschwindigkeit (Vi) der Temperatur der Kühlflüssigkeit größer ist als die Entwicklungsgrenzgeschwindigkeit (Vlim) der Temperatur der Kühlflüssigkeit, der Korrekturkoeffizient (Ccor) in einem größeren Ausmaß kleiner ist als eins als in den anderen Fällen, bei welchen der Korrekturkoeffizient (Ccor) kleiner ist als eins.

7. Verfahren nach einem der Ansprüche 1 bis 6, **dadurch gekennzeichnet, dass** das maximale Begrenzungsmoment (Cmax_lim) des Motors einen Mindestwert (Clmin) aufweist, der in Abhängigkeit von einer Drehzahl des Motors (Wm) definiert ist.

8. Verfahren nach einem der Ansprüche 1 bis 7, **dadurch gekennzeichnet, dass** seine Umsetzung deaktiviert wird, wenn eine Geschwindigkeit des Fahrzeugs (Vveh) unter einen ersten Schwellenwert (S1) fällt.

9. Verfahren nach Anspruch 8, **dadurch gekennzeichnet, dass** seine Umsetzung wieder aktiviert wird, wenn die Geschwindigkeit des Fahrzeugs (Vveh) größer ist als ein zweiter Schwellenwert (S2), der derart größer ist als der erste Schwellenwert, dass ein Betrieb in Hysterese erhalten wird.

10. Motorcomputer, der einen Speicher (100) umfasst, der Softwareanweisungen für das Umsetzen des Wärmeschutzverfahrens eines Verbrennungsmotors nach einem der vorhergehenden Ansprüche speichert.

## Claims

1. A method for thermal protection of an internal combustion engine of a motor vehicle comprising a cooling circuit inside of which circulates a cooling liquid, the temperature of which varies as a function of time, **characterized in that** it applies a closed loop iterative strategy using at input the torque originating from running, and on which a reduction coefficient is applied, comprising the step of adapting in a closed loop a maximum limitation torque (Cmax_lim) of said internal combustion engine as a function of a correction coefficient (Ccor) dependent on a difference between an instantaneous temperature change speed (Vi) of the cooling liquid and a maximum temperature change speed (Vlim) of the cooling liquid.

2. The method according to Claim 1, **characterized in that** the maximum temperature change speed (Vlim) of the cooling liquid is equal to the ratio between a difference between a maximum temperature of the cooling liquid (Tliqu_max) and a measured temperature of the cooling liquid (Tliqu_mes) and a parameterable time constant $(T_J)$.

3. The method according to Claim 2, **characterized in that** the maximum temperature of the cooling liquid (Tliqu_max) is the temperature of the cooling liquid which is not to be exceeded in nominal functioning of the cooling circuit.

4. The method according to any one of Claims 1 to 3, **characterized in that** it comprises the step of weighting a mean power of the engine (Pmoteur_moy) by said correction coefficient (Ccor) so as to deduce therefrom said maximum limitation torque (Cmax_lim).

5. The method according to Claim 4, **characterized in that** the mean power (Pmoteur_moy) is calculated over a parametrable duration of some seconds.

6. The method according to any one of Claims 1 to 5, **characterized in that** when the maximum temperature change speed (Vlim) of the cooling liquid is positive and the instantaneous temperature change speed (Vi) of the cooling liquid is greater than the maximum temperature change speed (Vlim) of the cooling liquid, the correction coefficient (Ccor) is less than one, when the maximum temperature change speed (Vlim) of the cooling liquid is positive and the instantaneous temperature change speed (Vi) of the cooling liquid is less than the maximum temperature change speed (Vlim) of the cooling liquid, the correction coefficient (Ccor) is greater than one,

when the maximum temperature change speed (Vlim) of the cooling liquid is negative and the instantaneous temperature change speed (Vi) of the cooling liquid is less than the maximum temperature change speed (Vlim) of the cooling liquid, the correction coefficient (Ccor) is less than one, and

when the maximum temperature change speed (Vlim) of the cooling liquid is negative and the instantaneous temperature change speed (Vi) of the cooling liquid is greater than the maximum temperature change speed (Vlim) of the cooling liquid, the correction coefficient (Ccor) is less than one to a greater extent than in the other cases in which the correction coefficient (Ccor) is less than one.

7. The method according to any one of Claims 1 to 6, characterized oi that the maximum limitation torque (Cmax _lim) of the engine has a minimum value (Cmin) defined as a function of an engine speed (Wm).

8. The method according to any one of Claims 1 to 7, **characterized in that** its implementation is deactivated when a speed of the vehicle (Vveh) passes below a first threshold (S1).

9. The method according to Claim 8, **characterized in that** its implementation is reactivated when the speed of the vehicle (Vveh) is greater than a second threshold (S2) greater than the first threshold, so as to obtain a hysteresis operation.

10. An engine computer comprising a memory (100) storing software instructions for the implementation of the method for thermal protection of an internal combustion engine according to one of the preceding claims.

**Fig.1**

**Fig.2**

**EP 3 063 398 B1**

## RÉFÉRENCES CITÉES DANS LA DESCRIPTION

**Documents brevets cités dans la description**

- US 6941245 B